**Europäisches Patentamt**

(19) **European Patent Office**

**Office européen des brevets**

(11) Veröffentlichungsnummer: **0 105 077**

**B1**

(12) **EUROPÄISCHE PATENTSCHRIFT**

(45) Veröffentlichungstag der Patentschrift:
22.07.87

(51) Int. Cl.⁴: **H 02 H 7/08,** H 02 H 7/09

(21) Anmeldenummer: **83103868.2**

(22) Anmeldetag: **20.04.83**

(54) Schutzeinrichtung für Asynchronmotoren.

(30) Priorität: **03.08.82 DE 3228954**
**12.10.82 DE 3237800**

(43) Veröffentlichungstag der Anmeldung:
**11.04.84 Patentblatt 84/15**

(45) Bekanntmachung des Hinweises auf die Patenterteilung:
**22.07.87 Patentblatt 87/30**

(84) Benannte Vertragsstaaten:
**AT BE CH DE FR GB LI LU NL**

(56) Entgegenhaltungen:
**DE-A-2 228 715**
**DE-A-2 261 407**
**DE-A-2 354 594**
**DE-A-2 625 279**

(73) Patentinhaber: **Loher Aktiengesellschaft, Hans-Loher- Strasse, D-8399 Ruhstorf/Rott (DE)**

(72) Erfinder: **Kolmeder, Walter, Dipl.- Ing., Lindauer Weg 31, D-8399 Ruhstorf/Rott. (DE)**
Erfinder: **Stadler, Hugo, Dipl.- Ing., Jahnstrasse 6, D-8398 Pocking (DE)**

(74) Vertreter: **Lorenz, Eduard, Rechtsanwälte Lorenz, Eduard - Seidler, Bernhard Seidler, Margrit - Gossel, Hans- K. Philipps, Ina, Dr. Widenmayerstrasse 23, D-8000 München 22 (DE)**

LIBER, STOCKHOLM 1987

## Beschreibung

Die Erfindung betrifft eine elektrische Schutzeinrichtung zum Überwachen von Asynchronmotoren nach dem Oberbegriff des Patentanspruchs 1.

Eine derartige elektrische Schutzeinrichtung ist aus der DE-A- 2 354 594 bekannt. Mit derartigen elektrischen Schutzeinrichtungen können Drehstrommotoren gegen die Störfälle "Überstrom" und "Stromunsymmetrie" geschützt werden.

Aus der DE-A-2 625 279 ist es bekannt, Drehstrommotoren, die durch Messen der Phasenströme auf Überlast überwacht werden, mit einer von der Größe einer festgestellten Überlast abhängigen Zeitverzögerung abzuschalten, um so zu verhindern, daß nur kurzzeitige Überlastungen, die vor Ablauf der Zeitverzögerung von selbst wieder verschwinden und den Motor erst bei einer die Zeitverzögerung überschreitenden Dauer gefährden würden, eine unnötige Abschaltung auslösen.

Aus der DE-A 2 261 407 ist ein Überstromschutz für ein Kraftsystem unter Verwendung einer Spannungseinstellung bekannt. Dieser Überstromschutz dient zum Schutz gegen zerstörende Überstromverhältnisse bei elektrischen Motoren und anderen elektrischen Kraftsystemen.

Aus der DE-A-2 228 715 ist eine Strombegrenzungsregelung für ein elektrisches Leitungssystem bekannt. Die durch die vorbekannte Strombegrenzungsregelung gegebenen Möglichkeiten gehen jedoch nicht über die im Oberbegriff des Patentanspruchs 1 geschilderten hinaus. Bisher konnten also Drehstrom-Asynchronmotoren, die an einem Netz konstanter Spannung und Frequenz eingesetzt werden, durch Motorschutzschalter oder auch eingebaute Temperaturfühler mit zugeschaltetem Schaltgerät (TMS genannt), gegen die Störfälle "Überstrom", "Stromunsymmetrie" (z.B. "Zweiphasenlauf") und "zu hohe Erwärmung im Stator und/oder Rotor" geschützt werden. Es sind auch Schutzeinrichtungen bekannt, die durch eingebauten Temperaturfühler in der Läuferwicklung die Übertemperatur des Läufers überwachen.

Alle diese Schutzeinrichtungen versagen bei umrichtergespeisten Motoren, also bei Motoren, die über statischem oder rotierendem Frequenzumformer mit einer frequenzproportionalen Spannung in der Drehzahl verstellt werden können. Der Grund hierfür ist, daß der von den Umrichtern her zugelassene maximale Strom nur geringfügig größer ist als der Motorennstrom. Die Erkennung eines unzulässigen Betriebszustandes über den Motorstrom allein ist deshalb nicht möglich. Auch die Überwachung der Wicklungstemperatur und/oder des Motorennstromes ist ebenfalls nicht mehr für alle Drehzahlstellbereiche bzw. Belastungsbereiche ausreichend, weil der Rotor gegenüber dem Ständer unterschiedliche, zum Teil wesentlich größere Erwärmung annehmen kann.

Häufig, insbesondere bei explosionsgeschützten Motoren, ist es jedoch aus Sicherheitsgründen erforderlich, alle Störfälle im gesamten Drehzahlbereich eindeutig zu überwachen und bei Überschreiten von bestimmten Grenzwerten oder Grenzwertkombinationen eine Abschaltung herbeizuführen.

Demgemäß besteht die der Erfindung zugrundeliegende Aufgabe darin, eine elektrische Schutzeinrichtung zum Überwachen von umrichtergespeisten Asynchronmotoren zu schaffen, die alle wesentlichen, eine Abschaltung des Motors erfordernden Störfälle im gesamten Drehzahlbereich zuverlässig erfaßt und bei Eintritt die Abschaltung des Motors bewirkt.

Erfindungsgemäß wird diese Aufgabe durch die im kennzeichnenden Teil des Patentanspruchs 1 angegebenen Merkmale gelöst:

Die erfindunßsgemäße elektrische Schutzeinrichtung erfüllt folgende Funktionen:

1. Überwachung der Höhen des Motorstromes in allen Phasen.

Mit dieser Funktion können Ströme bei beliebiger Kurvenform, nicht nur der Sinusform, überwacht werden. Dies geschieht dadurch, daß jeder Phasenstrom erfaßt wird. Überschreitet der Motorstrom im Vergleich mit einer vorgegebenen einstellbaren Grenze den Grenzwert, wird die Abschaltung des Motors ausgelöst.

2. Überwachung von Stromunsymmetrien.

Bei Phasenausfall oder ähnlichen Störfällen kann trotz Einhaltung des unter Ziff. 1 beschriebenen Stromgrenzwertes der Motor die zulässigen Übertemperaturen überschreiten. Aus diesem Grunde wird die Unsymmetrie der einzelnen Phasenströme überwacht. Dies geschieht durch einen Vergleich der Phasenströme jeweils untereinander. Bei abweichungen der Höhe eines Phasenstromes gegenüber den anderen Phasen von vorgegebenen Werten, z.B. 5 %, wird der Motor abgeschaltet.

3. Überwachung des Störfalles "blockierter Läufer"

Der Fall des blockierten Läufers stellt für jeden Umformer praktisch einen Kurzschlußfall dar. Dies bewirkt, daß die Ausgangsspannung des Umformers auf einen wesentlich kleineren Wert absinkt, als es dem frequenzproportionalen Verhalten entspricht. Diese Abweichung wird erkannt und zur Abschaltung benutzt.

Bei Betrieb mit einem Umrichter wird dem Asynchronmotor im unteren Drehzahlbereich im allgemeinen vom Umrichter eine Spannung angeboten, die nicht streng linear mit der Frequenz sinkt. Dies hat seine Ursache darin, daß sich der Motor mit abnehmender Umrichter-Frequenz immer mehr wie ein ohmscher Widerstand verhält und es bei streng linearer Spannungsabnahme aus diesem Grund zu einem übermäßigen Schlupf käme, der durch eine demgegenüber höhere Spannung vermieden werden kann. Eine zu große Überhöhung der Spannung im unteren Drehzahlbereich gegenüber dem sich bei streng linearer Absenkung ergebenden Wert kann aber zu einer Übersättigung des Motors und damit zu einer übermäßigen Erwärmung führen. Die vorgenannte Gefahr besteht insbesondere dann, wenn ein beliebiger Motor mit einem beliebigen Umformer zusammengeschaltet wird und noch keine gegenseitige Anpassung stattgefunden hat. Mit der im Patentanspruch gekennzeichneten bevorzugten Ausgestaltung der Erfindung wird auch der letztgenannte, für den Motor gefährliche Zustand in die Überwachung durch die Schutzeinrichtung miteinbezogen.

Die Maßnahme gemäß Patentanspruch 8 trägt dem Umstand Rechnung, daß die zulässige Spannungsüberhöhung im unteren Drehzahlbereich ein von der jeweiligen Motorkonstruktion abhängiges Charakteristikum ist, das sich in der U/f-Kennlinie des Motors ausdrückt. Dieses Charakteristikum ist bei der Schutzeinrichtung gemäß Anspruch 8 in die Überwachung einbeziehbar, so daß eine weitere Funktion:

4. Motorspezifische Abschaltbarkeit bei Überspannung im unteren Drehzahlbereich erreicht ist.

Eine weitere wesentliche Maßnahme, die für eigenbelüfete Maschinen von besonderer Bedeutung ist, ist die

5. Festlegung des zulässilen Überstromes, abhängig von Drehzahl und Kühlungsart des Motors.

Bei fremdbelüfteten umrichtergespeisten Asynchronmotoren ist der thermisch höchstzulässige Motorstrom nahezu unabhängig von der eingestellten Frequenz bzw. Drehzahl. Bei eigenbelüfteten Maschinen hingegen verschlechtert sich mit abnehmender Drehzahl die Kühlwirkung. Demzufolge sinkt der thermisch zulässige Überstrom mit abnehmender Drehzahl bzw. Frequenz. Dieses Verhalten ist durch die Maschinenkonstruktion vorgegeben. Deshalb erfolgt die unter Zif. 1 angegebene Funktion der Stromüberwachung bei den verschiedenen Drehzahlen bzw. Frequenzen entsprechend dieser bekannten Motorcharakteristik, wofür diese Grenzlinie nachbebildet wird. Überschreitet irgendein Phasenstrom bei irgendeiner Drehzahl diese Auslösekennlinie, so wird die unter Zif. 1 angegebene Abschaltung ebenfalls eingeleitet.

Die weiteren Unteransprüche betreffen Merkmale der Erfindung, die die Funktionstüchtigkeit - und sicherheit der Schutzeinrichtung noch weiter erhöhen und ggf. auch deren Aufbau in schaltungstechnischer Hinsicht fördern.

Nachstehend wird ein Ausführungsbeispiel der erfindungsgemäßen Schaltungseinrichtung anhand des beigefügten Blockschaltbildes erläutert:

Die Schuteinrichtung ist für ein 3-Phasen-System eingerichtet. Sie enthält zwei Stromsensoren 1 zur Erfassung des Motor-Ist-Stromes in zwei Phasen. Der dritte, nicht direkt gemessene Phasenstrom wird aus den beiden anderen, gemessenen, abgeleitet. Dies besorgt die Schaltung 1a. Ferner wird mittels eines Spannungswandlers 2 die Motor-Ist-Spannung und mittels eines Summenstromwandlers 3 die Summe der drei Phasenströme gemessen.

Die zeitlichen Werte der Phasenströme $i_{1(t)}$, $i_{2(t)}$, $i_{3(t)}$ und der Motorspannung $U_{1-2(t)}$ werden jeweils durch eine elektronische Schaltung 5 in eine effektivwertproportionale Gleichspannung $U_{m\ eff}$, $U_1$, $U_2$, $U_3$ umgeformt.

In einer ersten Vergleichsschaltung 6 wird der Motorstrom mit einem voreinstellbaren, frequenzunabhängigen Grenzwert k. $I_N$ verglichen. Ferner wird in dieser ersten Vergleichsschaltung 6 mit einer vom Umrichter 13 ausgegebenen, zu seiner Frequenz proportionalen Gleichspannung $U_f$ eine abhängig von der Umrichterfrequenz variable, zu dieser proportionalen Stromgrenze $I_{grenz\ (n)}$ erzeugt und der Ist-Stromwert mit dem diesbezüglichen frequenzproportionalen Grenzwert verglichen.

Für fremdbelüftete Motoren genügt in der Vergleichsschaltung 6 an sich der Grenzwert k. $I_N$ allein. Ebenso genügt für eigenbelüftete Motoren an sich allein der Grenzwert $I_{(grenz\ (n)}$. Es können jedoch beide Grenzwerte in der Vergleichsschaltung 6 vorgegeben sein, um dann je nach Art der Motorbelüftung für den Vergleich mit dem Motorstrom herangezogen zu werden.

Zu den vorstehenden Vergleichen in der ersten Vergleichsschaltung 6 wird nur einer der drei Phasenströme herangezogen. Dies ist aufgrund der nachstehend noch erörterten Unsymmetrieprüfung und Fehlerstromermittlung ausreichend. Wenn der mit der Gleichspannung $U_3$ ausgedrückte Ist-Wert dieses Phasenstromes entweder den frequenzunabhängigen Grenzwert k. $I_N$ oder den frequenzproportionalen Grenzwert $I_{grenz\ (n)}$ überschreitet, liefert die erste Vergleichsschaltung 6 jeweils ein entsprechendes erstes Abschaltsignal, das die Abschaltung des Motors auslöst, und zwar auf der Leitung 6 a bei Überschreitung des frequenzunabhängigen Grenzwertes und auf Leitung 6 b bei Überschreitung des frequenzabhängigen Grenzwertes.

In einer zweiten zwei Subtrahier-Schaltungen 14 und einen Komparator 14a aufweisenden Vergleichsschaltung 7 wird ein Vergleich auf Stromsymmetrie dahingehend durchgeführt, daß die Differenzen $I_1-I_2$ und $I_1-I_3$ gebildet werden und die jeweils größere Differenz in dem Komparator 14a mit einem einstellbaren Schwellwert verglichen wird. Überschreitet die Differenz, die bei Stromsymmetrie 0 ist, den Schwellwert, dann liefert auch die zweite Vergleichsschaltung 7 ein entsprechendes zweites Motor-Abschaltsignal.

Für die Überwachung des Motorbetriebszustandes "blockierter Läufer" wird in einer dritten Vergleichsschaltung 11 die Differenz zwischen der tatsächlichen Motorspannung und der vom Umrichter 13 mitausgegebenen frequenzproportionalen Gleichspannung $U_f$ gebildet. Sinkt das der Motorspannung proportionale Signal $U_{m\ eff}$ um einen voreingestellten Grenzwert unter die der Umrichter-Ausgangsspannung proportionale Gleichspannung $U_f$, so liefert die dritte Vergleichsschaltung 11 ein drittes Motor-Abschaltsignal.

Eine weitere, vierte Vergleichsschaltung 15, vergleicht mit Hilfe eines eingebauten Komparators die am Motor M jeweils anliegende Ist-Spannung $U_{1-2\ (t)}$ bzw. die hiervon abgeleitete, dieser entsprechende Gleichspannung $U_{m\ eff}$ mit einem in ihr gebildeten Grenzwert $U_{grenz\ (f,\ U_3)}$, der vom augenblicklichen Laststrom bzw. der davon abgeleiteten Gleichspannung $U_3$ und der Umrichter-Frequenz f bzw. der dieser entsprechenden Gleichspannung $U_f$ abhängig eingerichtet ist.

Die Charakteristik der Abhängigkeit des vorgenannten weiteren Grenzwertes $U_{grenz\ (f,\ U_3)}$ von der Umrichterfrequenz und dem Laststrom ist an der vierten Vergleichsschaltung in Anpassung an die U/f-Kennlinie des jeweiligen Motors M einstellbar. Die vierte Vergleichsschaltung 15 liefert ein viertes Abschaltsignal, wenn die tatsächliche Motorspannung bzw. die dieser entsprechende Gleichspannung $U_3$ den in ihr gebildeten Grenzwert überschreitet.

Der Summenstromwandler 3 arbeitet mit einem Auswertrelais 4 in solcher Weise zusammen, daß Fehlerströme erkannt werden, bei deren Auftreten ebenfalls ein Motor-Abschaltsignal ausgelöst wird. Ein Fehlerstrom liegt bei einem Drehstrommotor bekanntlich vor, wenn die Summe der drei Leiterströme, die im Normalfall zu jeden Zeitpunkt = 0 ist, von dem Wert 0 verschieden ist. Hierzu kann es z.B. kommen, wenn im Motor ein Erdschluß auftritt, bei dem Strom gegen Erde abfließt. Ein solcher Fehlerstrom kann eine solche Größe haben, daß z.B. im Teillastbetrieb die absolute Höhe der Leiterströme den maximal zulässigen Wert $k.\ I_N$ oder $I_{grenz\ (n)}$ nicht überschreitet. In diesem Störfalle liefert die erste Vergleichsschaltung 6 kein Abschaltsignal, gleichgültig, welche Phase betroffen ist. Aber auch die zweite Vergleichsschaltung 7 bleibt inaktiv, wenn die vorstehende Störung die Phase 2 betrifft, weil $i_2$ $_{(t)}$ nicht gemessen, sondern aus $i_1$ $_{(t)}$ und $i_3$ $_{(t)}$ abgeleitet wird. Um nun mit Sicherheit auch diese Störfälle zu erfassen, wird mittels des Summenstromwandlers 3 und des zugehörigen Answertrelais 4 die Überwachung auch auf etwaige Fehlerströme erstreckt. Es ist also zur Erfassung aller eine Abschaltung erfordernden Störfälle durch die zusätzliche Fehlerstromüberwachung möglich, nur zwei Leiterströme tatsächlich zu messen und den dritten aus den beiden gemessenen zu bilden, denn entweder ist die Summe aus allen drei Strömen zu jedem Zeitpunkt = 0 oder es liegt ein Fehlerstrom vor; und es genügt auch die Überwachung nur einer Phase auf den Wert $k.\ I_N$

oder $I_{grenz\ (n)}$, denn entweder ist dieser Wert in allen drei Phasen überschritten oder es liegt Unsymmetrie vor, oder in einer oder mehreren Phasen tritt ein sich als Fehlerstrom ausdrückender Leckstrom auf.

Die Motor-Abschaltsignale der Vergleichsschaltungen 6, 7 und 11 sowie des Auswert- bzw. Fehlerstromrelais 4 werden über Zeitglieder 8 erst weitergeleitet, wenn die Störung eine gewisse Zeit bestanden hat, da mehr oder minder kurzzeitige Störungen den Motor noch nicht gefährden. Die Zeitverzögerung ist vorzugsweise in Anpassung an die Besonderheiten des Motorbetriebes einstellbar.

Die aufgetretenen Störungen werden in elektronischen Speichern 9 festgehalten und angezeigt. Die Abschaltsignale steuern über eine Oder-Verknüpfung ein Relais 10, welches dann abschaltend in die Motorsteuerung eingreift.

Vorzugsweise werden die anderen Speicher 9 gesperrt, wenn ein Abschaltsignal als erstes seinen Speicher aktiviert und die Abschaltung in Gang gesetzt hat, denn dieses als erstes auftretende Abschaltsignale kennzeichnet den primären Fehler, während eventuell weitere nachkommende Abschaltsignale Fehlermeldungen zuzuschreiben sind, die von Folgefehlern herrühren, die der primäre Fehler ausgelöst hat und die somit keine echten Fehler sind.

Die Schutzeinrichtung weist Prüftasten 12 für die Simulierung der Störfälle "Überstrom", "Unsymmetrie", blckierter Läufer und "Überspannung" auf.

Zur Simulierung der Störmeldung "Überstrom" wird das Ausgangssignal des Stromsensors 1 der Phase W1 um einen entsprechenden voreinstellbaren Wert erhöht.

Für die Nachbildung des Störfalles "Unsymmetrie" wird in der Verstärkung des Summierers $i_1$ $_{(t)}$ + $i_3$ $_{(t)}$, d.h. der Schaltung 1 a, um einen einstellbaren Wert verändert. Somit ergibt sich ein gegenüber den anderen veränderter Strom-Ist-Wert $I_2$ $_{eff}$.

Zur Simulierung des Zustandes "blockierter Läufer", was gleichbedeutend ist mit "Motor gekippt", wird die Sekundärseite des Spannungswandlers 2 zur Erfassung der Motor-Ist-Spannung aufgetrennt. Damit wird der Überwachungseinrichtung Motorspannung = 0 vorgegeben.

Zur Simulierung des Störfalles "Überspannung", insbesondere im unteren Drehzahlbereich, wird die Ausgangsspannung der Schaltung 5, die die Motorspannung $U_{1-2\ (t)}$ normalerweise in eine effektivwertproportionale Gleichspannung $U_{m\ eff}$ umformt, gegenüber dem sich bei normalem Betrieb einstellenden Wert soweit erhöht, daß eine Grenzwertüberschreitung in der vergleichsschaltung 15 vorliegt.

Jede Störsimulation führt ebenfalls zur verzögerten Abschaltung des Motors. Die beschriebene Schutzeinrichtung kann selbstverständlich auch noch mit herkömmlichen Schutzeinrichtungen wie TMS oder Motorschutzschaltern, kombiniert werden.

Die Erfindung ermöglicht es, jeden Asynchron-Motor ohne Einbau von Sensoren durch nachträgliche Anwendung der Schutzeinrichtung ausreichend gegen alle Störfälle zu schützen. Dies gilt insbesondere auch für explosionsgeschützte Maschinen.

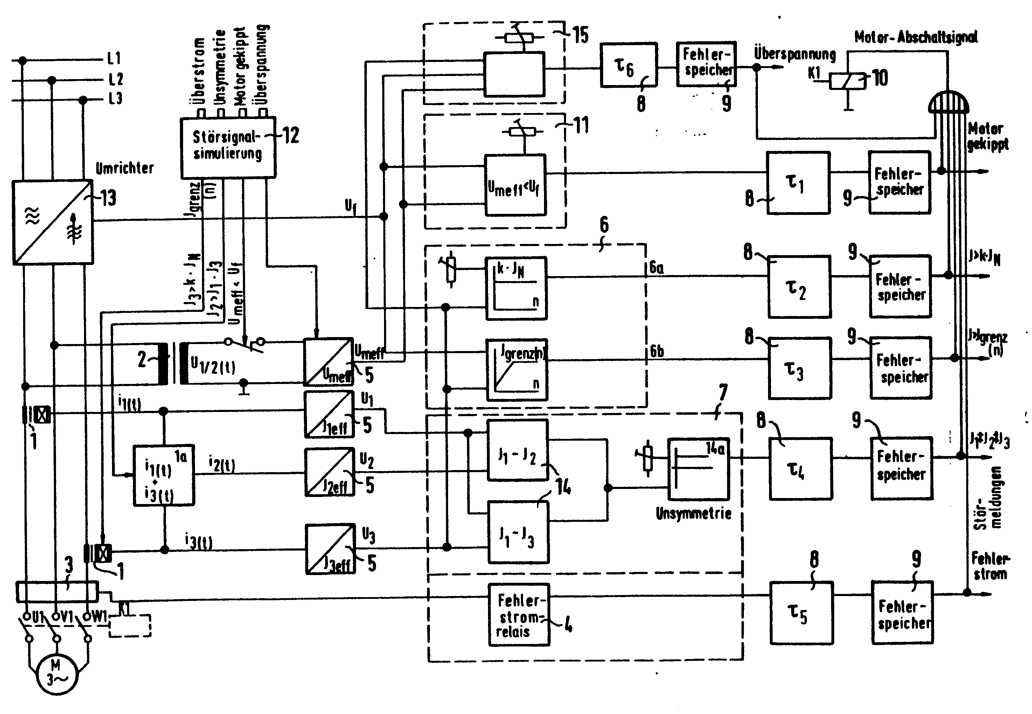

**Patentansprüche**

1. Elektrische Schutzeinrichtung zum Überwachen von Asynchronmotoren mit einer Schaltung (1, 5), die für jede Phase (U1, V1, W1) des Asynchronmotors ein dem Effektivwert des jeweiligen Phasenstromes (i1(t), i2(t), i3(t)) entsprechendes elektrisches Ist-Signal (U1, U2, U3) erzeugt, einer ersten Vergleichsschaltung (6), in der die elektrischen Ist-Signale mit einem voreinstellbaren Grenzwert (k x IN, Igrenz(n)) verglichen werden und ein erstes Abschaltsignal erzeugt wird, wenn mindestens ein Ist-Signal den Grenzwert überschreitet, einer zweiten Vergleichsschaltung (7), die die Ist-Signale untereinander vergleicht und ein zweites Abschaltsignal erzeugt, wenn die Ist-Signale über eine voreinstellbare Differenz hinaus voneinander abweichen und mit einer Einrichtung (10) zum Abschalten des Motors (M) beim Auftreten eines Abschaltsignals,
dadurch <u>gekennzeichnet</u>, daß zum Überwachen von umrichtergespeisten Asynchronmotoren
eine dritte Vergleichsschaltung (11) vorhanden ist, die im Frequenzbereich des Phasenstromes unterhalb einer vorwählbaren Frequenzgrenz, die am Motor (M) jeweils anliegende Ist-Spannung (U1/2(t)) auf Übereinstimmung mit der der augenblicklichen Frequenz zugehörigen Soll-Spannung (Uf) des Umrichters (13) prüft und ein drittes Abschaltsignal erzeugt, wenn die Ist-Spannung die Soll-Spannung um einen voreinstellbaren Differenzbetrag unterschreitet, und daß der voreinstellbare Grenzwert (Igrenz(n)) in der ersten Vergleichsschaltung (6) in Abhängigkeit von der Umrichterfrequenz erzeugt wird, wobei die Charakteristik dieser Abhängigkeit in Anpassung an die thermischen Gegebenheiten der jeweiligen Motorkonstruktion voreinstellbar ist.

2. Elektrische Schutzeinrichtung nach Anspruch 1,
dadurch <u>gekennzeichnet</u>,
daß zum Bilden der den jeweiligen Phasenströmen (i1(t), i2(t), i3(t)) entsprechenden elektrischen Ist-Signale (U1, U2, U3) zwei Phasenströme (i1(t), i3(t)) gemessen werden, diese beiden Phasenströme summiert werden und der dritte Phasenstrom (i2(t)) unter der Annahme, daß die Summe der drei Phasenströme (i1(t), i2(t), i3(t)) Null ist, errechnet wird und daß die Summe der drei Phasenströme gemessen und laufend überwacht wird, ob die Meßgröße tatsächlich den Wert Null hat.

3. Elektrische Schutzeinrichtung nach Anspruch 1 für Dreiphasen-Motoren,
dadurch <u>gekennzeichnet</u>,
daß zum Bilden der den jeweiligen Phasenströmen (i1(t), i2(t), i3(t)) entsprechenden elektrischen Ist-Signale (U1, U2, U3) zwei Phasenströme (i1(t), i3(t)) und die Summe der Phasenströme (i1(t), i2(t), i3(t)) gemessen werden

4. Elektrische Schutzeinrichtung nach einem der vorhergehenden Ansprüche,
dadurch <u>gekennzeichnet</u>,
daß die den jeweiligen Phasenströmen (i1(t), i2(t), i3(t)) entsprechenden Ist-Signale (U1, U2, U3) als Gleichwert-Signale (Gleichstrom, Gleichspannung) gebildet werden.

5. Elektrische Schutzeinrichtung nach einem der vorhergehenden Ansprüche,
<u>gekennzeichnet</u> durch
Zeitglieder (8) zum Verzögern der Motorabschaltung nach dem Auftreten des dem jeweiligen Abschaltsignal zugrundeliegenden Störfalles.

6. Elektrische Schutzeinrichtung nach Anspruch 5,
dadurch <u>gekennzeichnet</u>,
daß für die Phasenstrom-Grenzwertüberschreitung die Zeitverzögerung abhängig von der Größe der Überschreitung eingerichtet ist.

7. Elektrische Schutzeinrichtung nach einem der vorhergehenden Ansprüche,
dadurch <u>gekennzeichnet</u>,
daß in die Vergleichsschaltung (6, 7, 11) willkürlich anstelle der Ist-Werte (Ist-Signale bzw. Ist-Spannung) Fehler simulierende Störsignale (I3 > k.IN; I2 > I1, I3; Um eff > Uf) zur Prüfung der Schutzeinrichtung auf Funktionstüchtigkeit eingebbar sind.

8. Elektrische Schutzeinrichtung nach einem der vorhergehenden Ansprüche,
dadurch <u>gekennzeichnet</u>,
daß eine vierte Vergleichsschaltung (15) vorgesehen ist, die die am Motor (M) jeweils anliegende Ist-Spannung (U1/2(t), Um eff) mit einem weiteren Grenzwert (Ugrenz(f, U3)) vergleicht, der in der vierten Vergleichsschaltung in Abhängigkeit vom Laststrom und der Umrichterfrequenz derart erzeugt wird, daß eine Übersättigung vermieden wird, und ein viertes Abschaltsignal liefert, wenn die Ist-Spannung (U1/2, Um eff) diesen vierten Grenzwert (Ugrenz (f,U3)) überschreitet, und daß die Charakteristik der Abhängigkeit dieses weiteren Grenzwertes in Anpassung an die U/f-Kennlinie des Motors voreinstellbar ist.

9. Elektrische Schutzeinrichtung nach Anspruch 8,
dadurch <u>gekennzeichnet</u>,
daß die dem jeweiligen Laststrom (i3(t)) und der Umrichterfrequenz (f) entsprechenden Ist-Signale (U3(f)) als Gleichwert-Signale (Gleichstrom, Gleichspannung) gebildet werden.

10. Elektrische Schutzeinrichtung nach Anspruch 8 oder 9,
<u>gekennzeichnet</u> durch
ein Zeitglied (8) zum Verzögern der Motorabschaltung nach dem Auftreten des dem vierten Abschaltsignal zugrundeliegenden Störfalles.

11. Schutzeinrichtung nach einem der Ansprüche 8, 9 oder 10,

dadurch gekennzeichnet,

daß in die vierte Vergleichsschaltung (15) willkürlich anstelle der am Motor (M) anliegenden Ist-Spannung (U1/2 (t)) bzw. eines davon abgeleiteten elektrischen Signales (Um eff) ein den Fehler "Überspannung" simulierendes Störsignal (Um eff > Ugrenz (f,U3)) zur Prüfung der Schutzeinrichtung auf Funktionstüchtigkeit eingebbar ist.

.

**Claims**

1. A protective electric device for monitoring asynchronous motors, comprising a circuit (1, 5), which for each phase (U1, V1, W1) of the asynchronous motor (M) generates an actual-value electric signal (U1, U2, U3), which corresponds to the root means square value of the respective phase current (i1(t), i2(t), i3(t), a first comparator circuit (6), in which the actual-value electric signals are compared with a presettable limiting value (k x IN, Igrenz(n) and a first tripping signal is generated when at least one actual-value signal exceeds the limiting value, a second comparator circuit (7), which compares the actual-value signals with each other and generates a second tripping signal when the actual-value signals differ by more than a presettable difference, and means (10) for deenergizing the motor (M) in response to the occurrence of a tripping signal,

characterized in that

for the monitoring of converter-fed asynchronous motors a third comparator circuit (11) is provided which when the phase current is in a frequency range below a preselectable frequency limit checks whether the instantaneous actual-value voltage (U1/2(t)) applied to the motor (M) agrees with a reference voltage (Uf) of the converter (3), which desired voltage is associated with the instantaneous frequency, and said third comparator circuit generates a third tripping signal when the actual voltage is smaller by a presettable difference than the reference voltage, the presettable limiting value (Igrenz(n) is generated by the first comparator circuit (6) in dependence on the converter frequency, and the characteristic of that dependence is presettable in adaptation to the thermal characteristic of the motor design concerned.

2. A protective electric device according to claim 1,

characterized in that

the actual-value electric signals (U1, U2, U3) corresponding to respective phase currents (i1(t), i2(t), i3(t)) are generated in that two phase currents (i1(t), i3(t)) are measured and are summed, the third phase current (i2(t) is calculated under the assumption that the sum of the three phase currents (i1(t), i2(t), i3(t)) equals zero, the measured value is continuously monitored to check whether it is actually zero.

3. A protective electric device according to claim 1 for three-phase motors,

characterized in that

actual valual-electric signals (U1, U2, U3) corresponding to respective phase currents (i1(t), i2(t), i3(t)) are generated in that two phase currents (i1(t), i3(t), and the sum of the phase currents (i1(t), i2(t), i3(t)) are measured.

4. A protective electric device according to any of the preceding claims,

characterized in that

the actual-value signals (U1, U2, U3) corresponding to respective phase currents (i1(t), i2(t), i3(t)) are generated as constant-value signals (d.c., d.c. voltage).

5. A protective electric device according to any of the preceding claims,

characterized

by delay lines (8) for delaying the de-energization of the motor until after the occurrence of the disturbance which initiates a given tripping signal.

6. A protective electric device according to claim 5,

characterized in that

in case of a phase current exceeding the limiting value the delay depends on the amount of the excess current.

7. A protective electric device according to any of the preceding claims,

characterized in that

fault-simulating disturbance signals (I3 > k.IN; I2 > I1, I3; Um eff > Uf) rather than the actual values (actual-value signals or actual voltage) are adapted to be arbitrarily applied to the comparator circuit (6, 7, 11) for a check of the operative condition of the protective device.

8. A protective electric device according to any of the preceding claims,

characterized in that

a fourth comparator circuit (15) is provided for comparing the actual voltage (U1/2(t),Um eff) applied to the motor with another limiting value (Ugrenz(f,U3)), which is generated by the first comparator in dependence on the load current and the converter frequency so as to avoid an oversaturation, said fourth comparator delivers a fourth tripping signal when the actual voltage (U1/2, Um eff) exceed said fourth limiting value (Ugrenz (f, U3) and the characteristic of the dependence of said additional limiting value is presettable in adap-tation to the U/f characteristic of the motor.

9. A protective electric device according to claim 8,

characterized in that

the actual-value signals (U3(f) corresponding to the instantaneous load current (i3(t)) and the converter frequency (f) are generated as constant-value signals (d.c., d.c. voltage).

10. A protective electric device according to claim 8 or 9,

characterized by

a delay line (8) for delaying the de-energization of the motor until after the occurrence of a disturbance which initiates the fourth tripping signnal.

11. A protective device according to any of claims 8, 9 or 10,

characterized in that

the fourth comparator circuit (15) is adapted to have arbitrarily applied to it a disturbance signal which simulates the "overvoltage" fault (Um eff > Ugrenz (f, U3) rather than the actual voltage (U1/2(t)) applied to the motor (M) is adapted to be arbitrarily applied to the fourth comparator circuit (15) for a check of the operative condition of the protective device.

**Revendications**

1. Dispositif de protection électrique pour la surveillance de moteurs asynchrones comportant un circuit (1, 5) qui produit pour chaque phase (U1, V1, W1) du moteur asynchrone (M) un signal réel électrique (U1, U2, U3) correspondant à la valeur effective du courant de phase (i1(t), i2(t), i3(t)), un premier circuit comparateur (6) dans lequel les signaux réels électriques sont comparés à une valeur limite préréglable (k x IN, Igrenz(n)) et dans lequel un premier signal de débranchement est produit lorsque au moins un signal réel dépasse la valeur limite, un deuxième circuit comparateur (7) qui compare entre eux les signaux réels et qui produit un deuxième signal de débranchement lorsque les siqnaux réels diffèrent de plus d'une différence préréglable, ainsi qu'un dispositif (10) pour débrancher le moteur (M) lorsqu'un siqnal de débranchement apparaît,

caractérisé en ce que

pour la surveillance de moteurs asynchrones alimentés par un convertisseur, un troisième circuit comparateur (11) est prévu qui, lorsque le courant de phase est dans une plage de fréquence au-dessous d'une fréquence limite pouvant être présélectionnée, vérifie que la tension instantanée réelle (U1/2(t) du moteur concorde avec une tension de référence (Uf) du convertisseur (13), cette fréquence de référence étant associée à la fréquence instantanée, que ledit circuit comparateur produit un troisième siqnal de débranchement lorsque la tension réelle est inférieure à la tension de référence d'une différence préréglable, et que la valeur limite (Igrenz(n)) préréglable est produite dans le premier circuit comparateur (6) en fonction de la fréquence du convertisseur, la caractéristique de cet asservissement pouvant être préréglée en fonction des caractéristiques thermiques du moteur.

2. Dispositif de protection électrique selon la revendication 1,

caractérisé en ce que

pour former les signaux réels électriques (U1, U2, U3) correspondant aux divers courants de phase (i1(t), i2(t), i3(t)) deux courants de phase (i1(t), i3(t)) sont mesurés, que ces deux courants de phase sont additionnés et que le troisième courant de phase (i2(t)) est calculé en continu dans l'hypothèse que la somme des trois courants de phase (i1(t), i2(t), i3(t)) est égale à zéro et que la somme des trois courants de phase est mesurée et surveillée en permanence pour savoir si la valeur mesurée est effectivement zéro.

3. Dispositif de protection électrique selon la revendication 1 pour moteurs triphasés

caracterise en ce que

pour former les signaux rèels électriques (U1, U2, U3) correspondant aux divers courants de phase (i1(t), i2(t), i3(t)) deux courants de phase (i1(t)t, i3(t)) et la somme des courants de phase (i1(t), i2(t), i3(t)) sont mesurés.

4. Dispositif de protection électrique selon l'une des revendications précédentes,

caractérisée en ce que

les signaux réels (U1, U2, U3) correspondant aux différents courants de phase (i1(t), i2(t), i3(t)) sont formés comme signaux continus (courant continu, tension de courant continu).

5. Dispositif de protection électrique selon l'une des revendications précédentes,

caractérisé en ce que

des systèmes de temporisation (8) sont prévus pour retarder le débranchement du moteur après l'apparition de la perturbation qui déclenche le signal de débranchement.

6. Dispositif de protection électrique selon la revendication 5,

caractérisé en ce que

lorsque un courant de phase dépasse la valeur limite, la temporisation est asservie à la grandeur du dépassement.

7. Dispositif de protection électrique selon l'une des revendications précédentes,

caractérisé en ce que

des signaux de perturbation (13 > k.IN; 12 > l1, l3; Um eff > Uf) peuvent être arbitrairement entrés à la place des valeurs réelles (signaux réels, tension réelle) pour simuler des défauts afin de vérifier le fonctionnement du dispositif de protection.

8. Dispositif de protection électrique selon l'une des revendications précédentes,

caractérisé en ce qu'

un quatrième circuit comparateur (15) est prévu qui compare la tension réelle (U1/2(t), Um eff) du moteur (M) avec une autre valeur limite (Ugrenz(f, U3)) qui est produite dans le quatrième circuit comparateur en fonction du courant de charge et de la fréquence du convertisseur de manière à éviter une sursaturation, et fournit un quatrième signal de débranchement lorsque la tension réelle (U1/2, Um eff) dépasse ladite quatrième valeur limite (Ugrenz (f,U3)) et que la caractéristique de l'asservissement de cette autre valeur limite peut être réglée d'avance en fonction de la caractéristique U/f du moteur.

9. Dispositif de protection électrique selon la revendication 8,

caracterisé en ce que

les signaux réels (U3(f)) correspondant au courant de charge de l'instant (i3(t)) et à la fréquence du convertisseur (f) sont formés comme signaux continus (courant continu, tension du courant continu).

10. Dispositif de protection électrique selon la revendication 8 ou 9,

caractérisé en ce qu'

un système temporisateur (8) est prévu pour retarder le débranchement du moteur après l'apparition de la perturbation qui est la cause du quatrième signal de débranchement.

11. Dispositif de protection selon l'une des revendications 8, 9, ou 10

caractérisé en ce qu'

un signal perturbateur (Um eff > Ugrenz (f,(U3)) peut arbitrairement être entré dans le quatrième circuit comparateur (15) à la place de la tension réelle (U1/2(t)) du moteur (M) ou d'un signal électrique (Um eff) dérivé de cette tension pour simuler un défaut de "surtension", dans le but de vérifier le fonctionnement du dispositif de protection.